# FASCICULE DE BREVET EUROPEEN

(11) **EP 2 339 356 B1**
(45) Date de publication et mention de la délivrance du brevet: **22.01.2014**
(21) Numéro de dépôt: 10193344.8
(22) Date de dépôt: 01.12.2010
(51) Int. Cl.: G01P 5/26, G01S 17/58, G01P 5/16, G01P 13/02, G01S 7/481, G01S 7/499, G01S 17/87

(54) **Sonde anémométrique optique à deux axes de mesure**
Optisches Staurohr mit zwei Messachsen
Optical anemometric probe with two measurement axes

(30) Priorité: 11.12.2009 FR 0906002
(43) Date de publication de la demande: 29.06.2011
(73) Titulaire: Thales, 92200 Neuilly Sur Seine (FR)
(72) Inventeur: Schlotterbeck, Jean-Pierre, 26300 ROCHEFORT-SAMSON (FR); Rondeau, Philippe, 26320 SAINT MARCEL LES VALENCE (FR)
(74) Mandataire: Bréda, Jean-Marc

(56) Documents cités:
- WO-A1-2005/114252
- WO-A1-2009/134221
- US-A1- 2007 223 004
- NISHI H ET AL: "Complementary 2 dimensional laser Doppler velocimeter with an optical fiber probe", PROCEEDINGS OF THE INTERNATIONAL SOCIETY FOR OPTICAL ENGINEERING (SPIE), SPIE, USA LNKD- DOI:10.1117/12.20312, vol. 1267, 1 janvier 1990 (1990-01-01), pages 257-263, XP002539077, ISSN: 0277-786X

## Description

Le domaine de l'invention est celui de l'anémométrie optique et en particulier de l'anémométrie optique embarquée sur aéronef.

Pour piloter un aéronef, il est nécessaire de connaître au moins son altitude relative, sa vitesse par rapport à l'air ambiant et son incidence. Ces différentes données peuvent être mesurées localement, en champ proche, au voisinage de la peau de l'aéronef ou en champ lointain, en dehors du champ aérodynamique perturbé par l'appareil. Les données en champ proche sont obtenues classiquement par la mesure d'un certain nombre de paramètres aérodynamiques comme la pression statique permettant de déterminer l'altitude, la pression totale permettant de déterminer la vitesse relative, l'incidence locale et la température totale permettant d'apporter les corrections nécessaires. Ces mesures sont effectuées par un certain nombre de sondes situées sur la peau de l'avion. On citera notamment les sondes de pression statique, les sondes de pression ou « TAS », acronyme de « True Air Speed », les sondes de température ou « TAT », acronyme de « Total Air Temperature », les sondes d'incidence ou « AOA », acronyme de « Angle Of Attack », les sondes de dérapage ou « SSA », acronyme de « Side Slip Angle »...

Les données en champ lointain sont effectuées par des dispositifs d'anémométrie optique appelés « LIDAR », acronyme de « Light Detection And Ranging ». Un LIDAR émet et reçoit de la lumière selon un axe de mesure déterminé. Les architectures classiques de LIDAR d'anémométrie dite « 3D » permettant de faire des mesures dans les trois dimensions de l'espace utilisent le plus petit nombre possible d'axes de mesure pour des raisons évidentes de coût. Pour des systèmes à axes de mesure fixe, trois axes de mesure suffisent si l'on effectue des mesures dites « longue distance », c'est-à-dire sans effet significatif du champ aérodynamique local. Sinon, quatre axes de mesure sont nécessaires si les mesures sont effectuées à courte distance où les effets de couche limite font que le flux local n'est plus représentatif de toutes les variations des paramètres de « l'infini amont ».

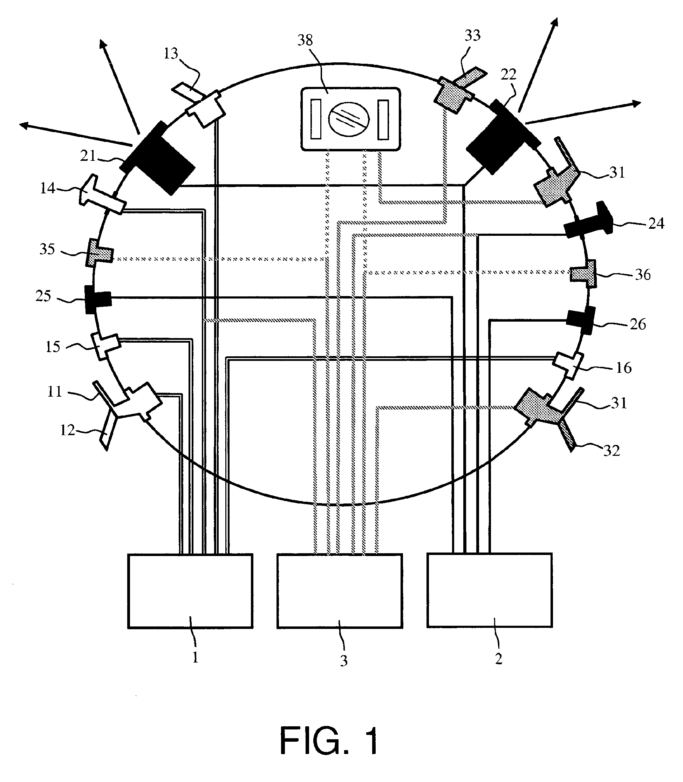

La figure 1 représente le schéma d'un système de mesures anémobarométriques comprenant à la fois des capteurs de mesure en champ proche et des « LlDARs ». Pour des raisons évidentes de sécurité, l'appareil dispose de trois chaînes de mesure autonomes.

Les chaînes 1 et 3, à gauche et au centre de la figure 1, comportent essentiellement les capteurs et les sondes pneumatiques suivants : un Pitot 11 et 31, une sonde d'incidence 12 et 32, une sonde de dérapage 13 et 33, une sonde de température 14 et 24 (sonde bi-élément partagée sur deux chaînes) et deux sondes de pression statique 15 et 16 et 35 et 36 situées de part et d'autre du fuselage. Ces différents capteurs sont représentés en blanc et gris sur la figure 1. Comme on le voit, ces chaînes permettent de mesurer tous les paramètres anémo-barométriques nécessaires au pilotage. Ces chaînes primaires de mesure sont tout à fait classiques.

La chaîne 2, à droite de la figure 1, comporte essentiellement les capteurs et les sondes suivants : deux LlDARs 21 et 22 comprenant deux têtes optiques bi-axes symbolisées par des flèches noires, une sonde de température 24 et deux sondes de pression statique 25 et 26 situées de part et d'autre du fuselage. Ces différents capteurs sont représentés en noir sur la figure 1. Les deux LlDARs permettent d'assurer à la fois les mesures de vitesse et d'incidence et de dérapage, c'est-à-dire les fonctions dites « TAS », « AOA » et « SSA ». Comme on le voit, cette chaîne permet également de mesurer tous les paramètres anémobarométriques nécessaires au pilotage.

Enfin, une instrumentation de secours dite « Stand By » 38 qui se trouve sur la planche de bord de l'aéronef utilise un Pitot supplémentaire 31 et partage des sondes de pression statiques avec la chaîne 3 (sondes de pression statique 35 et 36).

Une architecture optique classique 100 utilisée pour réaliser les LlDARs de la figure 1 est représentée en figure 2; un dispositif similaire est décrit dans la demande de brevet WO 2005/114252. Sur la figure 2 et sur la suivante, on a adopté les conventions suivantes :
- pour la propagation des faisceaux lumineux, les sens de propagation de la lumière sont représentés par des flèches à extrémité triangulaire,
- la polarisation linéaire de la lumière est représentée par une flèche à extrémité en V quand le plan de polarisation est dans le plan de la feuille (Polarisation dite transverse électrique ou TE) et par un cercle centré quand le plan de polarisation est perpendiculaire au plan de la feuille (Polarisation dite transverse magnétique ou TM).

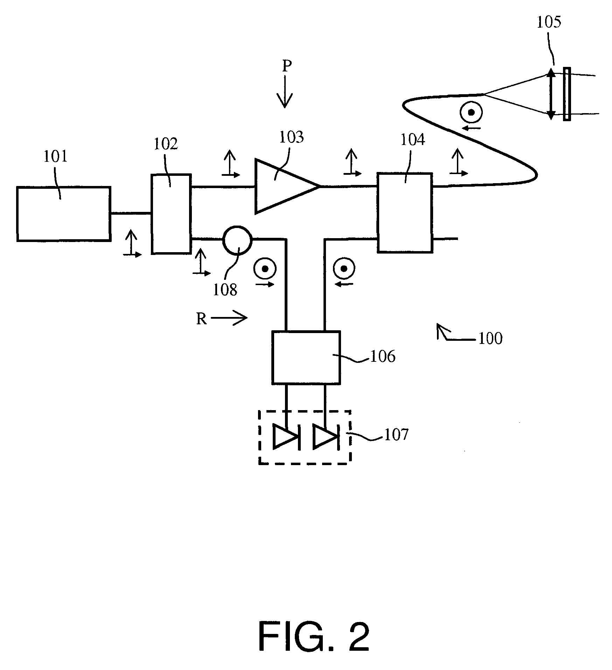

L'exemple d'implémentation présenté sur la figure 2 correspond à une architecture fibrée, c'est-à-dire que les différentes fonctions optiques sont reliées entre elles au moyen de fibres optiques, et plus particulièrement de fibres à maintien de polarisation. Comme on le voit sur la figure 2, l'architecture optique classique 100 comprend essentiellement :
- Une source laser 101 fournissant une onde de référence polarisée linéairement. Sur la figure 2, la direction de polarisation de cette onde est dans le plan de la feuille ;
- Un dispositif diviseur 102 partageant l'onde de référence polarisée fournie par cette source 101 en deux voies : la voie de référence R dans laquelle circule un premier flux lumineux et la voie de puissance P dans laquelle circule un second flux lumineux ;
- La voie de puissance P emprunte l'une des deux sorties du dispositif séparateur 102. Le second flux lumineux de cette voie passe ensuite dans un amplificateur ou « booster » 103 ;
- Le second flux lumineux traverse ensuite un circulateur optique 104. Ce circulateur a comme fonction d'aiguiller à la fois le flux de la voie de puissance vers la tête optique 105 et le flux reçu vers les dispositifs de mesure 106 et 107. Ce circulateur comporte trois voies. La première voie correspond à l'entrée du flux lumineux amplifié. La seconde voie correspond à la sortie dudit flux vers la tête optique et la troisième voie correspond à la sortie du flux lumineux rétrodiffusé vers la chaîne de mesure 106 et 107. Ainsi, le flux lumineux introduit sur la première voie est transmis avec un minimum de pertes vers la seconde voie sans être transmis vers la troisième voie alors qu'un flux lumineux introduit par la seconde voie est transmis avec un minimum de perte vers la troisième voie sans être transmis vers la première voie. Une façon courante de minimiser les pertes de cette fonction pour une large gamme de longueurs d'onde est d'utiliser un dispositif de séparation de polarisation. Ainsi, le circulateur transmet un faisceau de lumière polarisé linéairement dans le plan de la feuille de la première voie vers la seconde voie et le circulateur transmet un faisceau de lumière polarisé linéairement perpendiculairement au plan de la feuille de la seconde voie vers la troisième voie. A titre d'exemple, l'élément 104 peut être un dispositif séparateur de polarisation associé à une lame quart d'onde contenue dans l'optique de projection 105. Il est à noter, que dans ce type d'architecture, on polarise les faisceaux d'émission en polarisation circulaire le plus tard possible pour minimiser les sources de signal de type « narcisse », c'est-à-dire les échos sur des impuretés ou des éléments du système, comme par exemple, les réflexions sur les différents diopres rencontrées sur le chemin optique des voies d'émission et de réception ;
- A la sortie du circulateur 104, le flux de la voie de puissance passe dans la tête optique 105 qui assure une double fonction. D'une part, elle projette le flux optique polarisé linéairement dans le plan de la feuille dans l'atmosphère à la distance de mesure souhaitée. D'autre part, elle récolte le flux rétrodiffusé par les particules ou les aérosols contenus dans le volume de mesure et fournit en sortie un faisceau de réception qui passe dans le circulateur 104 qui transmet donc vers la voie de mesure un flux rétrodiffusé polarisé linéairement perpendiculairement au plan de la feuille. Sur la figure 5, la tête optique 105 est représentée classiquement par une double flèche, symbole de la lentille et un hublot plan. Le changement de polarisation peut être réalisé par l'utilisation d'une lame quart d'onde dans la tête optique
- Un dispositif de mélange 106 de type interférométrique qui peut être, à titre d'exemple, un coupleur à maintien de polarisation permet la recombinaison cohérente du flux issu de la voie de référence et du flux de retour venant du circulateur 104 ;
- Les deux faisceaux issus du dispositif 106 sont dirigés vers les deux diodes d'un détecteur équilibré 107, permettant de s'affranchir du bruit relatif de la source encore appelé « RIN » pour «Relative Intensity Noise ». L'onde de référence est orientée par l'élément optique 108 selon la même polarisation que le signal collecté ou rétrodiffusé. Cet élément 108 peut être une lame demi-onde. Dans le cas où la propagation des faisceaux est assurée au moyen de fibres optiques, cette fonction peut être obtenue en effectuant une soudure croisée (axe lent/axe rapide) sur deux fibres à maintien de polarisation.

Les éléments les plus coûteux de cette architecture sont la source laser 101, le « booster » 103, le détecteur 107 et le traitement de signal. Une installation avion comporte quatre axes de mesure, répartis en deux têtes optiques bi-axes.

L'installation de ce type de LIDAR sur aéronef souffre de plusieurs inconvénients majeurs, détaillés ci-dessous :
- La dynamique angulaire de l'avion est assez forte (généralement comprise entre -5° à +25°). La dynamique angulaire du vecteur vitesse air peut être doublée en champ local, passant ainsi à près 60 degrés, ce qui est très important et a un impact sur la dilution géométrique. Ainsi, on risque de perdre un axe de mesure lorsqu'il se retrouve pratiquement normal au vecteur vitesse que l'on cherche à mesurer ;
- La mesure de l'incidence est critique pour la tenue des performances tant en précision qu'en bande passante, sensiblement plus que la mesure de la vitesse elle-même ;
- La mesure 4-axes en champ proche nécessairement perturbé répartie en deux lieux conduit à un niveau de redondance sur la mesure 3D quasi nulle, ce qui ne permet plus de faire un réel contrôle d'intégrité de la mesure ;
- L'emplacement et l'orientation des axes de mesure doivent être tels que l'on soit sûr de ne pas inverser le signe de la projection de vitesse dans la mesure où l'on utilise en général un homodynage optique sans décalage de fréquence, c'est-à-dire qu'une source unique est utilisée pour générer l'onde de signal d'une part et l'onde de référence d'autre part.

Ces inconvénients conduisent, pour maintenir les performances de métrologie dans tout le domaine de vol et avec une probabilité de fausse alarme faible, à surdimensionner certaines caractéristiques du LIDAR comme, par exemple, sa puissance optique émise afin d'obtenir une meilleure visibilité du signal.

Le problème d'inversion de signe ou de repliement peut être évité par l'emploi d'un modulateur acousto-optique ou d'un second laser de référence cohérent mais décalé en longueur d'onde. Ces solutions sont nécessairement complexes et coûteuses.

Le dispositif selon l'invention pallie dans une large mesure ces inconvénients. L'idée consiste à modifier a minima l'architecture optique pour pouvoir disposer de plus d'angles de vue, c'est à dire d'axes de mesure, sans multiplier le nombre de sources, de moyens d'amplification, de détection ou de traitement du signal. Comme on l'a vu sur le dispositif de la figure 2, on utilise à l'émission et à la réception une seule polarisation de la lumière. Le dispositif selon l'invention utilise deux axes de polarisation de la lumière perpendiculaires entre eux. On émet ainsi sur deux têtes optiques orientées différemment deux flux lumineux venant de la même source, tous deux polarisés linéairement mais dont les plans de polarisation sont perpendiculaires. La détection et l'analyse des signaux rétrodiffusés par ces deux têtes optiques peuvent se faire très simplement. On crée ainsi deux axes de mesure sans alourdir considérablement l'architecture optique.

Plus précisément, l'invention a pour objet une sonde anémométrique optique comportant au moins une source laser émettant un faisceau lumineux primaire polarisé linéairement, un bloc optique et une voie optique de mesure, le bloc optique comprenant des moyens de séparation dudit faisceaux primaire en deux faisceaux secondaires, une voie optique de référence, une voie optique dite d'émission le premier faisceau secondaire passant à travers la voie optique de référence, le second faisceau secondaire passant à travers la voie optique dite d'émission, la voie optique d'émission comportant au moins un circulateur optique et une première tête optique dite d'émission/réception éclairant une première zone de mesure,
caractérisé en ce que
- Le bloc optique comprend des moyens optiques de rotation de la polarisation disposés à la sortie de la source laser et avant les moyens de séparation, lesdits moyens optiques de rotation de la polarisation permettant de faire tourner le plan de polarisation du faisceau lumineux primaire d'un angle connu, le bloc optique comprend également une seconde tête optique d'émission/réception éclairant une seconde zone de mesure ;
- le circulateur optique comporte quatre ports, un premier port d'entrée par lequel entre le second faisceau secondaire, un second et un troisième ports d'entrée/sortie reliés respectivement à la première tête optique et à la seconde tête optique et un quatrième port relié à la voie optique de mesure, le circulateur étant agencé de façon que,
   ■ lorsque le second faisceau secondaire est polarisé linéairement dans un plan pré-déterminé, il soit conduit vers le second port,
   ■ lorsque le second faisceau secondaire est polarisé linéairement dans un plan perpendiculaire audit plan pré-déterminé, il soit conduit vers le troisième port,
   ■ Le premier faisceau rétrodiffusé par la première zone de mesure, reçu par la première tête optique et polarisé perpendiculairement au plan pré-déterminé, entrant sur le second port est conduit vers le quatrième port ;
   ■ Le second faisceau rétrodiffusé par la seconde zone de mesure, reçu par la seconde tête optique et polarisé dans le plan pré-déterminé, entrant sur le troisième port est conduit vers le quatrième port.

Ce circulateur 4 voies peut être simplement un séparateur de polarisation bidirectionnel réalisé soit en optique « libre », le séparateur est alors un miroir ou un cube séparateur de polarisation, soit en optique fibrée par un séparateur de polarisation 4 ports. Ce séparateur de polarisation est associé à une lame quart d'onde.

Avantageusement, les moyens optiques de rotation de la polarisation ont au moins deux positions de commande privilégiées, la première position correspondant à une orientation du plan de polarisation du faisceau lumineux primaire dans le plan prédéterminé, la seconde correspondant à une orientation du plan de polarisation du faisceau lumineux primaire perpendiculairement audit plan prédéterminé, une troisième position intéressante correspond à une rotation du plan de polarisation du faisceau lumineux primaire à 45 degrés dudit plan prédéterminé. Les moyens optiques de rotation de la polarisation peuvent comprendre des moyens permettant de commuter périodiquement de la première position à la seconde position.

Avantageusement, la voie optique de référence comporte un élément apte à faire tourner le plan de polarisation de la lumière de 90 degrés, la voie optique dite d'émission comporte un amplificateur optique, la voie optique de mesure comporte un dispositif optique de mélange du premier faisceau secondaire issu de la voie optique de référence et des premier et second faisceaux rétrodiffusés.

L'invention concerne également un dispositif optique de mesures anémométriques comprenant au moins deux sondes anémométriques telles que décrites ci-dessus. Ce dispositif peut également comprendre une source laser unique, deux blocs optiques identiques et une voie optique de mesure unique, ladite source émettant un faisceau lumineux primaire polarisé linéairement, le dispositif optique de mesures anémométriques comprenant un séparateur optique dudit faisceaux primaire en deux sous-faisceaux primaires, le premier sous-faisceau primaire alimentant le premier bloc optique, le second sous-faisceau primaire alimentant le second bloc optique, chaque bloc optique comprenant des moyens de séparation d'un des deux sous-faisceau primaire en deux faisceaux secondaires, une voie optique de référence, une voie optique dite d'émission et une voie optique de mesure, le premier faisceau secondaire passant à travers la voie optique de référence, le second faisceau secondaire passant à travers la voie optique dite d'émission, la voie optique d'émission comportant au moins un circulateur optique et une première tête optique dite d'émission/réception éclairant une première zone de mesure,
- chaque bloc optique comprenant des moyens optiques de rotation de la polarisation disposés à l'entrée du sous-faisceau primaire et avant les moyens de séparation, lesdits moyens optiques de rotation de la polarisation permettant de faire tourner le plan de polarisation du faisceau lumineux primaire d'un angle connu, le bloc optique comprenant également une seconde tête optique d'émission/réception éclairant une seconde zone de mesure ;
- le circulateur optique comportant quatre ports, un premier port d'entrée par lequel entre le second faisceau secondaire, un second et un troisième ports d'entrée/sortie reliés respectivement à la première tête optique et à la seconde tête optique et un quatrième port relié à la voie optique de mesure, le circulateur étant agencé de façon que,
   ■ lorsque le second faisceau secondaire est polarisé linéairement dans un plan pré-déterminé, il soit conduit vers le second port,
   ■ lorsque le second faisceau secondaire est polarisé linéairement dans un plan perpendiculaire audit plan pré-déterminé, il soit conduit vers le troisième port,
   ■ Le premier faisceau rétrodiffusé par la première zone de mesure, reçu par la première tête optique et polarisé perpendiculairement au plan pré-déterminé, entrant sur le second port est conduit vers le quatrième port ;
   ■ Le second faisceau rétrodiffusé par la seconde zone de mesure, reçu par la seconde tête optique et polarisé dans le plan pré-déterminé, entrant sur le troisième port est conduit vers le quatrième port.

L'invention sera mieux comprise et d'autres avantages apparaîtront à la lecture de la description qui va suivre donnée à titre non limitatif et grâce aux figures annexées parmi lesquelles :
La figure 1 déjà commentée représente le schéma d'un système de mesures anémo-barométriques comprenant à la fois des capteurs de mesure en champ proche et des « LlDARs » ;
La figure 2 également décrite représente une architecture optique classique utilisée pour réaliser des LlDARs ;
La figure 3 représente l'architecture optique d'un LIDAR « à deux têtes optiques » selon l'invention ;
La figure 4 représente l'architecture optique d'un LIDAR « à quatre têtes optiques » selon l'invention.

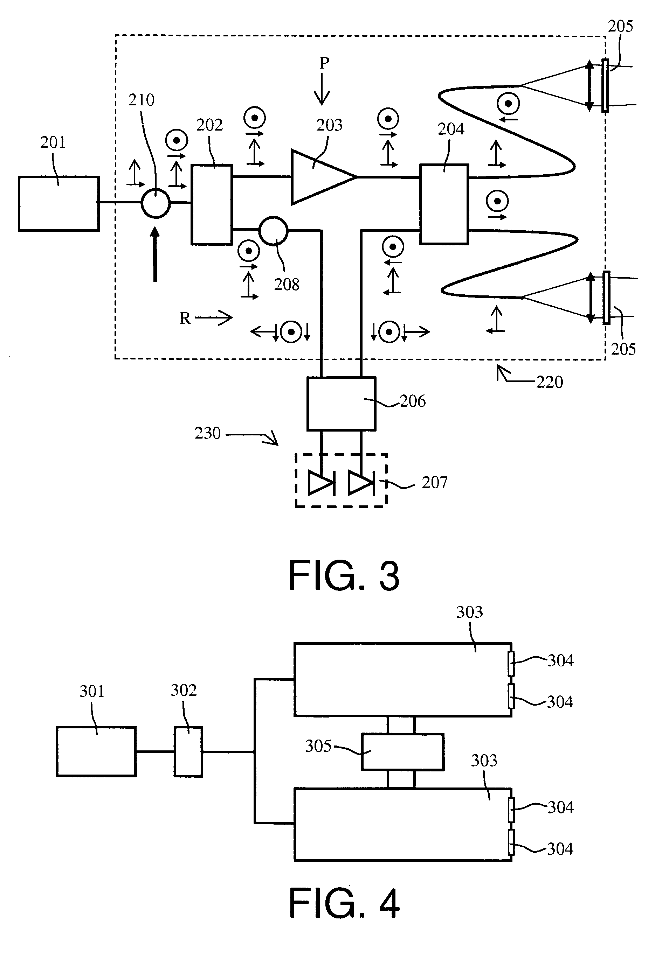

A titre d'exemple, la figure 3 représente une première architecture optique d'un LIDAR « à deux têtes optiques » selon l'invention. Elle comporte essentiellement une source laser 201 émettant un faisceau lumineux primaire polarisé linéairement, un bloc optique 220 et une voie optique de mesure 230 qui sont détaillées ci-dessous.

La source laser 201 fournit une onde de référence primaire polarisée linéairement. Sur la figure 3, la direction de polarisation de cette onde est dans le plan de la feuille.

Le bloc optique 220 comprend:
- des moyens optiques 210 de rotation de la polarisation disposés à la sortie de la source laser, ces moyens optiques de rotation de la polarisation permettant de faire tourner le plan de polarisation du faisceau lumineux primaire d'un angle connu ;
- Un dispositif séparateur 202 partageant l'onde de référence polarisée fournie par cette source 201 en deux faisceaux secondaires, le premier faisceau secondaire passant à travers une voie optique de référence, le second faisceau secondaire passant à travers une voie optique d'émission ou voie de puissance P. Le second flux lumineux de cette voie passe ensuite dans un amplificateur ou « booster » 203 ;
- Deux têtes optiques 205 dites d'émission/réception éclairant respectivement une première zone de mesure et une seconde zone de mesure. Ces têtes optiques ont une architecture proche de celles des télescopes, c'est-à-dire qu'elles sont agencées de façon à focaliser les faisceaux d'émission à très longue distance ;
- Ces deux têtes optiques 205 sont reliées à un circulateur optique 204. Ce circulateur optique comporte quatre ports, un premier port d'entrée par lequel entre le second faisceau secondaire, un second et un troisième ports d'entrée/sortie reliés respectivement à la première tête optique et à la seconde tête optique et un quatrième port relié à la voie optique de mesure, le circulateur étant agencé de façon que,
   - lorsque le second faisceau secondaire est polarisé linéairement dans un plan pré-déterminé, il soit conduit vers le second port,
   - lorsque le second faisceau secondaire est polarisé linéairement dans un plan perpendiculaire audit plan pré-déterminé, il soit conduit vers le troisième port,
   - Le premier faisceau rétrodiffusé par la première zone de mesure, reçu par la première tête optique et polarisé perpendiculairement au plan pré-déterminé, entrant sur le second port est conduit vers le quatrième port ;
   - Le second faisceau rétrodiffusé par la seconde zone de mesure, reçu par la seconde tête optique et polarisé dans le plan pré-déterminé, entrant sur le troisième port est conduit vers le quatrième port. Cet élément 204 est un dispositif séparateur de polarisation bidirectionnel.
- A la sortie du circulateur 204, le flux de la voie de puissance passe donc, en fonction de sa polarisation, dans l'une et/ou l'autre des deux têtes optiques 205. Chaque tête optique assure ainsi une double fonction. D'une part, elle projette le flux optique dans l'atmosphère à la distance de mesure souhaitée. D'autre part, elle récolte le flux rétrodiffusé par le volume de mesure et fournit en sortie un faisceau de réception qui, à travers le circulateur 204, est transmis vers la voie de mesure présentant une polarisation perpendiculaire à celle du faisceau arrivant par la voie de puissance. Cette rotation de polarisation peut être réalisée grâce a l'emploi d'une lame quart d'onde ;
- Un dispositif de mélange 206 de type interférométrique qui peut être, à titre d'exemple, un coupleur à maintien de polarisation permet la recombinaison cohérente du flux issu de la voie de référence et du ou des flux de réception venant du circulateur 204 ;
- Les deux faisceaux issus du dispositif 206 sont dirigés vers les deux diodes d'un détecteur équilibré 207, permettant de s'affranchir du bruit relatif de la source encore appelé « RIN » pour «Relative Intensity Noise ». L'onde de référence est orientée par l'élément optique 108 selon la même polarisation que les signaux rétrodiffusés. Cet élément 208 peut être une lame demi-onde. Dans le cas où la propagation des faisceaux est assurée au moyen de fibres optiques, cette fonction peut être obtenue en effectuant une soudure croisée (axe lent/axe rapide) sur deux fibres à maintien de polarisation.

Les moyens optiques de rotation de la polarisation 210 permettent de choisir soit une polarisation totalement transverse électrique TE, soit une polarisation totalement transverse magnétique TM, soit encore une polarisation en partie transverse électrique TE et en partie transverse magnétique TM. Dans le premier cas, le flux secondaire est émis uniquement sur la première tête optique, dans le second cas, le flux secondaire est émis uniquement sur la seconde tête optique, enfin dans le troisième cas, le flux est émis en partie sur la première tête optique et en partie sur la seconde tête optique. Dans les deux premiers cas, la détection est assurée de la façon déjà décrite. Dans le troisième cas, le détecteur reçoit une somme de deux signaux. Ces deux signaux qui correspondent à deux « Raies Doppler » sont vus par les moyens de mesure en même temps. Ces deux signaux sont à des fréquences différentes et sont, par conséquent faciles à détecter. Par contre, il est essentiel de déterminer de quelle tête optique ils sont issus. La détermination de la tête optique peut se faire soit par « tracking », le signal ne pouvant brusquement changer de fréquence, soit encore lors d'une séquence de levée de doute, obtenue par extinction momentanée d'une polarisation donc d'un signal.

Comme il a été dit, une des utilisations privilégiées de ce type de sonde est la mesure des paramètres aérodynamiques sur aéronef. La position du vecteur vitesse de l'aéronef dans l'air ambiant varie dans une plage angulaire importante. Aussi, le système de traitement du signal issu des moyens de détection et non représenté sur la figure 3 peut comprendre des moyens permettant de sélectionner l'une ou l'autre des têtes optiques de sortie en fonction de la position angulaire des têtes optiques par rapport au vecteur vitesse à mesurer, de façon à optimiser la mesure. On peut ainsi optimiser la dilution géométrique en conservant toute la puissance, donc la pleine sensibilité sur l'axe de mesure choisi. A basse altitude de l'aéronef, la sensibilité n'est plus réellement un problème dans la mesure où l'atmosphère comporte un grand nombre de particules exploitables. Par contre, il est nécessaire d'avoir une très forte intégrité des mesures car l'aéronef est en phase critique de décollage ou d'atterrissage. Dans ce cas, il est possible de positionner les moyens optiques de rotation de la polarisation à une valeur intermédiaire qui conduit à émettre sur les deux voies. Dans une variante, si l'amplificateur optique ou « booster » ne permet pas l'amplification simultanée sur les deux polarisations, on peut réaliser une commutation entre les deux voies d'émission à une cadence de quelques dizaines de Hz.

Si les quatre axes basiques de mesure sont équipés de ce type de sonde, le traitement du signal dispose alors de huit axes de mesure, correspondant à environ quatre ordres de redondance.

Lorsqu'un système de mesure complet comporte plusieurs sondes, il peut être intéressant qu'au moins deux des blocs optiques soient desservies par une source laser unique. Ainsi, une source unique peut adresser simultanément deux ou quatre têtes optiques différentes d'émission/réception. Dans une variante un peu plus complexe illustrée en figure 4, une source laser 301 peut adresser au moyen d'un séparateur 302 deux blocs optiques 303 comportant chacun deux têtes optiques 304, ces deux blocs étant reliés à une seule voie de mesure 305. Dans ce cas, l'architecture du dispositif comprend quatre axes de mesure avec seulement :
- 1 source laser injecteur 301,
- 1 seule voie de détection et de traitement du signal 305,
- 2 voies d'amplification et de séparation des faisceaux issus de la source laser,
- 4 têtes optiques d'émission/réception 304.

La sonde selon l'invention est applicable à une architecture pulsée pour aiguiller un axe de mesure anémométrique vers une fonction annexe, avec un faible taux d'occupation. Cette fonction annexe peut être utilisée, par exemple, pour réaliser des mesures par effet « Doppler » ou des mesures d'altitude par rapport au sol. Ce type de fonction annexe convient bien aux applications embarquées sur hélicoptère qui volent généralement à basse altitude et qui ont besoin de ce type de fonctions.

Les dispositifs comportant des sondes selon l'invention ont des coûts très voisins de ceux comportant des sondes ne comportant qu'une seule tête optique. En effet, le coût de l'optique de sortie est marginale comparée à celui du reste de l'architecture dans la mesure où la tête optique ne comporte que quelques lentilles de petite taille. Seuls les moyens optiques de rotation de commande représentent un coût plus élevé. Cependant, au prix d'une augmentation de coût marginale, la mise en oeuvre de cette invention permet d'augmenter de manière très significative la précision angulaire et l'intégrité basse altitude d'un LiDAR soit d'anémométrie pour avion (assurant ainsi les fonctions de mesure de vitesse « TAS » et les fonctions de clinomètrie « AOA » et « SSA ») ou d'hélicoptère (assurant ainsi les fonctions de mesure de la vitesse « TAS » et de ses composantes latérale Vy et verticale Vz).

## Revendications

1. Sonde anémométrique optique comportant au moins une source laser (201) émettant un faisceau lumineux primaire polarisé linéairement, un bloc optique (220) et une voie optique de mesure (230), le bloc optique comprenant des moyens de séparation (202) dudit faisceaux primaire en deux faisceaux secondaires, une voie optique de référence (R) et une voie optique dite d'émission (P), le premier faisceau secondaire passant à travers la voie optique de référence, le second faisceau secondaire passant à travers la voie optique dite d'émission, la voie optique d'émission comportant au moins un circulateur optique (204) et une première tête optique (205) dite d'émission/réception éclairant une première zone de mesure,
**caractérisé en ce que**
- Le bloc optique (220) comprend des moyens optiques de rotation de la polarisation (210) disposés à la sortie de la source laser (201) et avant les moyens de séparation (202), lesdits moyens optiques de rotation de la polarisation permettant de faire tourner le plan de polarisation du faisceau lumineux primaire d'un angle connu, le bloc optique comprend également une seconde tête optique (205) d'émission/réception éclairant une seconde zone de mesure ;
- le circulateur optique (204) comporte quatre ports, un premier port d'entrée par lequel entre le second faisceau secondaire, un second et un troisième ports d'entrée/sortie reliés respectivement à la première tête optique (205) et à la seconde tête optique (205) et un quatrième port relié à la voie optique de mesure, le circulateur étant agencé de façon que,
■ lorsque le second faisceau secondaire est polarisé linéairement dans un plan pré-déterminé, il soit conduit vers le second port,
■ lorsque le second faisceau secondaire est polarisé linéairement dans un plan perpendiculaire audit plan prédéterminé, il soit conduit vers le troisième port,
■ Le premier faisceau rétrodiffusé par la première zone de mesure, reçu par la première tête optique et polarisé perpendiculairement au plan pré-déterminé, entrant sur le second port est conduit vers le quatrième port ;
■ Le second faisceau rétrodiffusé par la seconde zone de mesure, reçu par la seconde tête optique et polarisé dans le plan pré-déterminé, entrant sur le troisième port est conduit vers le quatrième port.

2. Sonde anémométrique optique selon la revendication 1, **caractérisé en ce que** le circulateur optique (204) comporte un séparateur de polarisation bidirectionnel associé à une lame quart d'onde.

3. Sonde anémométrique optique selon la revendication 1, **caractérisé en ce que** les moyens optiques de rotation de la polarisation ont au moins trois positions de commande privilégiées, la première position correspondant à une rotation du plan de polarisation du faisceau lumineux primaire dans le plan prédéterminé, la seconde correspondant à une rotation du plan de polarisation du faisceau lumineux primaire perpendiculairement audit plan prédéterminé, la troisième correspondant à une rotation du plan de polarisation du faisceau lumineux primaire à 45 degrés dudit plan prédéterminé.

4. Sonde anémométrique optique selon la revendication 3, **caractérisé en ce que** les moyens optiques de rotation de la polarisation comprennent des moyens permettant de commuter périodiquement de la première position à la seconde position.

5. Sonde anémométrique optique selon l'une des revendications précédentes, **caractérisé en ce que** la voie optique de référence comporte un élément (208) apte à faire tourner le plan de polarisation de la lumière de 90 degrés.

6. Sonde anémométrique optique selon l'une des revendications précédentes, **caractérisé en ce que** la voie optique dite d'émission comporte un amplificateur optique (203).

7. Sonde anémométrique optique selon l'une des revendications précédentes, **caractérisé en ce que** la voie optique de mesure comporte un dispositif optique de mélange (206) du premier faisceau secondaire issu de la voie optique de référence et des premier et second faisceaux rétrodiffusés.

8. Dispositif optique de mesures anémométriques, **caractérisé en ce qu'**il comprend au moins deux sondes anémométriques selon l'une des revendications 1 à 7.

9. Dispositif optique de mesures anémométriques comprenant une source laser unique (301), deux blocs optiques identiques (303) et une voie optique de mesure unique (305), ladite source émettant un faisceau lumineux primaire polarisé linéairement, le dispositif optique de mesures anémométriques comprenant un séparateur optique (302) dudit faisceaux primaire en deux sous-faisceaux primaires, le premier sous-faisceau primaire alimentant le premier bloc optique, le second sous-faisceau primaire alimentant le second bloc optique, chaque bloc optique comprenant des moyens de séparation d'un des deux sous-faisceau primaire en deux faisceaux secondaires, une voie optique de référence, une voie optique dite d'émission et une voie optique de mesure, le premier faisceau secondaire passant à travers la voie optique de référence, le second faisceau secondaire passant à travers la voie optique dite d'émission, la voie optique d'émission comportant au moins un circulateur optique et une première tête optique (304) dite d'émission/réception éclairant une première zone de mesure,
**caractérisé en ce que**
- chaque bloc optique comprend des moyens optiques de rotation de la polarisation disposés à l'entrée du sous-faisceau primaire et avant les moyens de séparation, lesdits moyens optiques de rotation de la polarisation permettant de faire tourner le plan de polarisation du faisceau lumineux primaire d'un angle connu, le bloc optique comprend également une seconde tête optique (304) d'émission/réception éclairant une seconde zone de mesure ;
- le circulateur optique comporte quatre ports, un premier port d'entrée par lequel entre le second faisceau secondaire, un second et un troisième ports d'entrée/sortie reliés respectivement à la première tête optique et à la seconde tête optique et un quatrième port relié à la voie optique de mesure, le circulateur étant agencé de façon que,
■ lorsque le second faisceau secondaire est polarisé linéairement dans un plan pré-déterminé, il soit conduit vers le second port,
■ lorsque le second faisceau secondaire est polarisé linéairement dans un plan perpendiculaire audit plan prédéterminé, il soit conduit vers le troisième port,
■ Le premier faisceau rétrodiffusé par la première zone de mesure, reçu par la première tête optique et polarisé perpendiculairement au plan pré-déterminé, entrant sur le second port est conduit vers le quatrième port ;
■ Le second faisceau rétrodiffusé par la seconde zone de mesure, reçu par la seconde tête optique et polarisé dans le plan pré-déterminé, entrant sur le troisième port est conduit vers le quatrième port.

## Patentansprüche

1. Optische anemometrische Sonde, die wenigstens eine Laserquelle (201), die einen linear polarisierten primären Lichtstrahl aussendet, einen Optikblock (220) und einen optischen Messkanal (230) umfasst, wobei der Optikblock Mittel (202) zum Unterteilen der primären Strahlen in zwei Sekundärstrahlen, einen optischen Referenzkanal (R) und einen optischen Sendekanal (P) umfasst, wobei der erste Sekundärstrahl durch den optischen Referenzkanal passiert, wobei der zweite Sekundärstrahl durch den sogenannten optischen Sendekanal passiert, wobei der optische Sendekanal wenigstens einen optischen Zirkulator (204) und einen ersten optischen Sende-/Empfangskopf (205) umfasst, der eine erste Messzone beleuchtet,
**dadurch gekennzeichnet, dass**
der Optikblock (220) optische Mittel (210) zum Rotieren der Polarisation umfasst, die am Ausgang der Laserquelle (201) und vor den Unterteilungsmitteln (202) angeordnet sind, wobei die optischen Polarisationsrotationsmittel ein Drehen der Polarisationsebene des ersten Lichtstrahls um einen bekannten Winkel zulassen, wobei der Optikblock auch einen zweiten optischen Sende-/Empfangskopf (205) umfasst, der eine zweite Messzone beleuchtet;
der optische Zirkulator (204) vier Ports aufweist, einen ersten Eingangsport, durch den der zweite Sekundärstrahl eintritt, einen zweiten und dritten Ein-/Ausgangsport, die jeweils mit dem ersten optischen Kopf (205) und dem zweiten optischen Kopf (205) verbunden sind, und einen vierten Port, der mit dem optischen Messkanal verbunden ist, wobei der Zirkulator so ausgelegt ist, dass
wenn der zweite Sekundärstrahl linear in einer vorbestimmten Ebene polarisiert ist, er zum zweiten Port geleitet wird,
wenn der zweite Sekundärstrahl in einer Ebene lotrecht zu der vorbestimmten Ebene linear polarisiert ist, er zum dritten Port geleitet wird,
der erste von der ersten Messzone rückgestreute Strahl, der vom ersten optischen Kopf empfangen wird und lotrecht zu der vorbestimmten Ebene polarisiert ist, der über den zweiten Port eintritt, zum vierten Port geleitet wird;
der zweite von der zweiten Messzone rückgestreute Strahl, der vom zweiten optischen Kopf empfangen wird und in der vorbestimmten Ebene polarisiert ist, der über den dritten Port eintritt, zum vierten Port geleitet wird.

2. Optische anemometrische Sonde nach Anspruch 1, **dadurch gekennzeichnet, dass** der optische Zirkulator (204) einen bidirektionalen Polarisationsseparator umfasst, der mit einem Viertelwellenlängenplättchen assoziiert ist.

3. Optische anemometrische Sonde nach Anspruch 1, **dadurch gekennzeichnet, dass** die optischen Polarisationsrotationsmittel wenigstens drei bevorrechtigte Steuerpositionen haben, wobei die erste Position einer Rotation der Polarisationsebene des ersten Lichtstrahls in der vorbestimmten Ebene entspricht, die zweite einer Rotation der Polarisationsebene des ersten Lichtstrahls lotrecht zu der vorbestimmten Ebene entspricht, die dritte einer Rotation der Polarisationsebene des ersten Lichtstrahls in einem Winkel von 45 Grad von der vorbestimmten Ebene entspricht.

4. Optische anemometrische Sonde nach Anspruch 3, **dadurch gekennzeichnet, dass** die optischen Polarisationsrotationsmittel Mittel umfassen, die ein periodisches Schalten von der ersten Position in die zweite Position zulassen.

5. Optische anemometrische Sonde nach einem der vorherigen Ansprüche, **dadurch gekennzeichnet, dass** der optische Referenzkanal ein Element (208) umfasst, das die Polarisationsebene des Lichts um 90 Grad drehen lassen kann.

6. Optische anemometrische Sonde nach einem der vorherigen Ansprüche, **dadurch gekennzeichnet, dass** der sogenannte optische Sendekanal einen optischen Verstärker (203) umfasst.

7. Optische anemometrische Sonde nach einem der vorherigen Ansprüche, **dadurch gekennzeichnet, dass** der optische Messkanal eine optische Mischvorrichtung (206) des von dem optischen Referenzkanal kommenden ersten Sekundärstrahls und der ersten und zweiten rückgestreuten Strahlen umfasst.

8. Optische Windmessvorrichtung, **dadurch gekennzeichnet, dass** sie wenigstens zwei anemometrische Sonden nach einem der Ansprüche 1 bis 7 umfasst.

9. Optische Windmessvorrichtung, die Folgendes umfasst: eine einzige Laserquelle (301), zwei identische Optikblöcke (303) und einen einzigen optischen Messkanal (305), wobei die Quelle einen linear polarisierten ersten Lichtstrahl aussendet, wobei die optische Windmessvorrichtung einen optischen Separator (302) des ersten Strahls in zwei primäre Substrahlen umfasst, wobei der erste primäre Substrahl den ersten Optikblock speist, der zweite primäre Substrahl den zweiten Optikblock speist, wobei jeder Optikblock Mittel zum Unterteilen von einem der zwei primären Substrahlen in zwei Sekundärstrahlen, einen optischen Referenzkanal, optischer Sendekanal genannt, und einen optischen Messkanal umfasst, wobei der erste Sekundärstrahl durch den optischen Referenzkanal passiert, wobei der zweite Sekundärstrahl durch den optischen Sendekanal passiert, wobei der optische Sendekanal wenigstens einen optischen Zirkulator und einen ersten optischen Sende-/Empfangskopf (304) umfasst, der eine erste Messzone beleuchtet,
**dadurch gekennzeichnet, dass**
jeder Optikblock optische Mittel zum Rotieren der Polarisation umfasst, die am Eingang des ersten Substrahls und vor den Unterteilungsmitteln angeordnet sind, wobei die optischen Polarisationsrotationsmittel ein Drehen der Polarisationsebene des ersten Lichtstrahls um einen bekannten Winkel zulassen, der Optikblock auch einen zweiten optischen Sende-/Empfangskopf (304) umfasst, der eine zweite Messzone beleuchtet;
der optische Zirkulator vier Ports umfasst, einen ersten Eingangsport, durch den der zweite Sekundärstrahl eintritt, einen zweiten und dritten Ein-/Ausgangsport, die jeweils mit dem ersten Optikkopf und dem zweiten Optikkopf verbunden sind, und einen vierten Port, der mit dem optischen Messkanal verbunden ist, wobei der Zirkulator so ausgelegt ist, dass
wenn der zweite Sekundärstrahl linear in einer vorbestimmten Ebene polarisiert ist, er zum zweiten Port geleitet wird,
wenn der zweite Sekundärstrahl linear in einer Ebene lotrecht zu der vorbestimmten Ebene polarisiert ist, er zum dritten Port geleitet wird,
der von der ersten Messzone rückgestreute erste Strahl, empfangen mit dem ersten Optikkopf und lotrecht zu der vorbestimmten Ebene polarisiert, der am zweiten Port eintritt, zum vierten Port geleitet wird;
der von der zweiten Messzone rückgestreute zweite Strahl, empfangen von dem zweiten optischen Kopf und in der vorbestimmten Ebene polarisiert, der am dritten Port eintritt, zum vierten Port geleitet wird.

## Claims

1. An optical anemometric probe including at least one laser source (201) emitting a linearly polarised primary light beam, an optical block (220) and an optical measurement channel (230), the optical block comprising means (202) for separating said primary beam into two secondary beams, an optical reference channel (R) and a so-called optical transmission channel (P), the first secondary beam passing through the optical reference channel, the second secondary beam passing through the so-called transmission channel, the optical transmission channel including at least one optical circulator (204) and a first so-called optical transmission/reception head (205) illuminating a first measurement area,
**characterized in that**
the optical block (220) comprises optical means (210) for rotating the polarisation arranged at the output of the laser source (201) and before the separation means (202), said optical means for rotating the polarisation allowing rotation of the polarisation plane of the primary light beam by a known angle, the optical block also comprises a second optical transmission/reception head (205) illuminating a second measurement area;
the optical circulator (204) includes four ports, a first input port through which the second secondary beam enters, second and third input/output ports connected to the first optical head (205) and to the second optical head (205) respectively and a fourth port connected to the optical measurement channel, the circulator being laid out so that,
when the second secondary beam is linearly polarised in a predetermined plane, it is led to the second port,
when the second secondary beam is linearly polarised in a plane perpendicular to said predetermined plane, it is led to the third port,
the first beam backscattered by the first measurement area, received by the first optical head and polarised perpendicularly to the predetermined plane, entering the second port, is led to the fourth port;
the second beam backscattered by the second measurement area, received by the second optical head and polarised in the predetermined plane, entering the third port, is led to the fourth port.

2. The optical anemometric probe according to claim 1, **characterized in that** the optical circulator (204) includes a bidirectional polarisation separator associated with a quarter-wave plate.

3. The optical anemometric probe according to claim 1, **characterized in that** the optical means for rotating the polarisation have at least three preferential control positions, the first position corresponding to a rotation of the plane of polarisation of the primary light beam in the predetermined plane, the second corresponding to a rotation of the plane of polarisation of the primary light beam perpendicularly to said predetermined plane, the third corresponding to a rotation of the plane of polarisation and of the primary light beam at 45° of said predetermined plane.

4. The optical anemometric probe according to claim 3, **characterized in that** the optical means for rotating the polarisation comprise means for periodically switching from the first position to the second position.

5. The optical anemometric probe according to one of the preceding claims, **characterized in that** the reference optical channel includes an element (208) capable of rotating the plane of polarisation of the light by 90°.

6. The optical anemometric probe according to one of the preceding claims, **characterized in that** the so-called optical transmission channel includes an optical amplifier (203).

7. The optical anemometric probe according to one of the preceding claims, **characterized in that** the optical measurement channel includes an optical device (206) for mixing the first secondary beam stemming from the reference optical channel with the first and second back-scattered beams.

8. An optical device for anemometric measurements, **characterized in that** it comprises at least the two anemometric probes according to one of claims 1 to 7.

9. An optical device for anemometric measurements comprising one single laser source (301), two identical optical blocks (303) and a single optical measurement channel (305), said source transmitting a linearly polarised primary light beam, the optical device for anemometric measurements comprising an optical separator (302) of said primary beam into two primary sub-beams, the first primary sub-beam feeding the first optical block, the second primary sub-beam feeding the second optical block, each optical block comprising means for separating one of the two primary sub-beams into two secondary beams, a reference optical channel, a so-called optical transmission channel and an optical measurement channel, the first secondary beam passing through the reference optical channel, the second secondary beam passing through the so-called optical transmission channel, the optical transmission channel including at least one optical circulator and a first optical so-called transmission/reception head (304) illuminating a first measurement area,
**characterized in that**
each optical block comprises optical means for rotating the polarisation, arranged at the inlet of the primary sub-beam and before the separation means, said optical means for rotating the polarisation giving the possibility of rotating the plane of polarisation of the primary light beam by a known angle, the optical block also comprises a second optical transmission/reception head (304) illuminating a second measurement area;
the optical circulator includes four ports, a first input port through which the second secondary beam enters, second and third input/output ports connected to the first optical head and to the second optical head respectively and a fourth port connected to the optical measurement channel, the circulator being laid out so that,
when the second secondary beam is linearly polarised in a predetermined plane, it is led towards the second port,
when the second secondary beam is linearly polarised in a plane perpendicular to said predetermined plane, it is led towards the third port,
the first beam backscattered by the first measurement area, received by the first optical head and polarised perpendicularly to the predetermined plane, entering the second port, is led towards the fourth port;
the second beam backscattered by the second measurement area, received by the second optical head and polarised in the predetermined plane, entering the third port, is led towards the fourth port.
